Europäisches Patentamt

European Patent Office

Office européen des brevets

(19)

(11) Veröffentlichungsnummer: **0 302 044**
**B1**

(12) **EUROPÄISCHE PATENTSCHRIFT**

(45) Veröffentlichungstag der Patentschrift:
**27.12.90**

(21) Anmeldenummer: **88890148.5**

(22) Anmeldetag: **13.06.88**

(51) Int. Cl.⁵: **B60J 5/04**

(54) Türverstärkung an Kraftfahrzeugen zum Schutz bei seitlichen Kollisionen.

(30) Priorität: **31.07.87 AT 1942/87**

(43) Veröffentlichungstag der Anmeldung:
**01.02.89 Patentblatt 89/5**

(45) Bekanntmachung des Hinweises auf die Patenterteilung:
**27.12.90 Patentblatt 90/52**

(84) Benannte Vertragsstaaten:
**DE FR IT SE**

(56) Entgegenhaltungen:
**DE-A- 1 806 716**
**DE-A- 2 045 875**
**DE-B- 1 959 989**

**Patent Abstracts of Japan, Band 7,**
**Nr. 24 (M-189)(116), 29. Januar 1983**

Die Akte enthält technische Angaben, die nach dem Eingang der Anmeldung eingereicht wurden und die nicht in dieser Patentschrift enthalten sind.

(73) Patentinhaber: **Austria Metall Aktiengesellschaft,**
**A-5282 Braunau am Inn(AT)**

(72) Erfinder: **Garnweidner, Peter, Otto v. Lilientalstrasse 32,**
**A-5020 Salzburg(AT)**

(74) Vertreter: **Hain, Leonhard, Dipl.-Ing., Tal 18/IV,**
**D-8000 München 2(DE)**

## Beschreibung

Die Erfindung betrifft eine Türverstärkung an Kraftfahrzeugen zum Schutz bei seitlichen Kollisionen gemäß dem Oberbegriff des Patentanspruches 1:

Zur Türverstärkung an Kraftfahrzeugen ist es in der Praxis bekannt, horizontale Träger zwischen vertikalen Türholmen anzubringen. der Schutzeffekt solcher Türverstärkungen ist auf eine bestimmte Höhe des eindringenden Körpers beschränkt. Derart ausgestattete Türen sind außerdem schwer, weil die in die vertikalen Holme des Türrahmens einzuleitenden Kräfte ein große Dimensionierung der Türkonstruktion verlangen. Andererseits sind schon horizontal oder auch vertikal verlaufende Zugbänder auf der Innenseite eines Türaußenbleches bekanntgeworden. Die bekannten vertikalen Zugbänder sind dabei an Flanschen des Türaußenbleches abgestützt (JP-A 178 923/82 und 178 924/82, wobei entweder am Flansch selbst oder an einem diesen Flansch übergreifenden Klemm/ bzw. Spannhalter Haken zum Einhängen der Zugbänder ausgebildet sind. Abgesehen davon, daß diese Einhängebefestigung sich schon bei stärkeren Erschütterungen lösen kann, werden die bei ·Kollisionen von den Zugbändern aufzunehmenden Kräfte direkt in die nicht verstärkten Außenbleche geleitet, so daß auch diese Zugbänder keinen besonderen Widerstand bieten können. Weitere bekannte Türverstärkungen (DE-A 1 806 716, DE-B 1 959 989), insbesondere an mit Fenstern ausgestatteten Kraftfahrzeugtüren, sehen in Längsrichtung, d.h. horizontal verlaufende Zugbänder vor, die so befestigt sind, daß auch sie die aufgenommenen Zugkräfte in das wenig Widerstand bietende Türaußenblech einleiten.

Gemäß einem weiteren Vorschlag (DE-A 2 045 875) ist es bekannt, auf der Innenseite des Außenbleches horizontale Spannbänder, die an den Scharnieren und Klauenlagern verankert sind, vorzusehen. Daraus ergibt sich aber der Nachteil, daß diese Zugbänder nur auf festgelegten Höhen angeordnet werden können. Außerdem sind besonders verstärkte Scharniere und Klauenlager erforderlich.

Der Erfindung liegt daher die Aufgabe zugrunde, einen zu einer Kraftfahrzeug-Türverstärkung vertikal verlaufenden Zugverband so anzubringen, daß er höchste Zugkräfte aufnehmen kann.

Diese Aufgabe wird mit einer Türverstärkung gemäß dem Oberbegriff des Patentanspruches 1 erfindungsgemäß durch die kennzeichnenden Merkmale dieses Patentanspruches gelöst.

Vorteilhafte Weiterentwicklungen der Erfindung sind in Unteransprüchen beansprucht.

Eine erfindungsgemäß ausgebildete Türverstärkung ermöglicht eine leichtere und damit kostengünstigere Konstruktion. Der vertikal verlaufende Zugverband bietet vor eindringenden Körpern besseren, von der Eindringhöhe unabhängigen Schutz. Da der Zugverband in die Gesamtkonstruktion der Tür intergriert ist, ist auch eine gute Einbeziehung des Wagenaufbaus zur Aufnahme der Verformungskräfte möglich. Der Zugverband ist innenseitig am Türaußenblech an horizontalen Trägern angeordnet, wovon der obere der beiden Träger die äußere Abschlußkante zum Fenster bildet. Ein weiterer horizontaler Träger ist als innere Abschlußkante zum Fenster vorgesehen, so daß die Längsseiten dieser beiden Träger so geformt sind, daß sie formschlüssig ineinanderpassen, dadurch bei Verformungen durch seitliche Kollisionen ineinandergreiffen und ergeben einen festen Querträgerverband in der Türkonstruktion, auf den sich der Zugverband stützen kann. Der untere horizontale Träger bildet den Rahmenträger der Türkonstruktion und ist so geformt, daß die Türschwellenkonstruktion ihn der Länge nach formschlüssig umgreift. Dadurch verhaken der Träger und die Türschwellenkonstruktion im Falle einer seitlichen Kollision ineinander, leiten die Belastung in den Wagenbau weiter und ergeben ein festes Stützwerk für den Zugverband.

Ein Zugverband kann durch Schrauben, Kleben oder durch Keilspanneinrichtungen an den Trägern angebracht werden. Vorteilhaft an einer Verbindung durch Keile ist, daß sie ermöglicht, den Zugverband so zu befestigen, daß er unter Belastung immer stärker in die Keilaufnahmen gezogen wird. Durch Ändern der Vorspannung der Keile in ihren Aufnahmen ist der Zugverband verschieden stark einspannbar, was eine Beeinflussung der Eigenfrequenz der Tür bewirkt und der Klang beim Türschluß einstellbar wird.

Als zusätzliche Schutzmaßnahme kann zwischen dem Zugverband und der Außenverkleidung ein Füllstoff zur Erhöhung des Anfangswiderstandes bei der Verformung angeordnet sein, oder ein zweiter an den vertikalen Holmen der Tür angebrachter Zugverband hinter dem Ersten eingebaut sein, wobei die vertikalen Holme der Türkonstruktion in die angrenzenden vertikalen Holme des Wagenbaues formschlüssig eingreifen. Wird bei einer seitlichen Kollision die Tür soweit eingedrückt, daß dieser zweite Zugverband erreicht und ebenfalls verformt wird, so leitet er diese von ihm aufgenommenen Kräfte an die vertikalen Holme der Türkonstruktion weiter, die durch ihre formschlüssige Ausbildung mit den vertikalen Holmen des Wagenbaues die Kräfte in diesen einleiten. Dadurch ist eine noch bessere und gleichmäßigere Kraftaufnahme durch den Wa genbau gegeben, was die Gesamtfestigkeit der Wagenkonstruktion erhöht. Der hintere Zugverband ist auch als Aggregateträger verwendbar.

Die Erfindung wird anhand der nachstehenden Zeichnungen beschrieben.

Es zeigen:

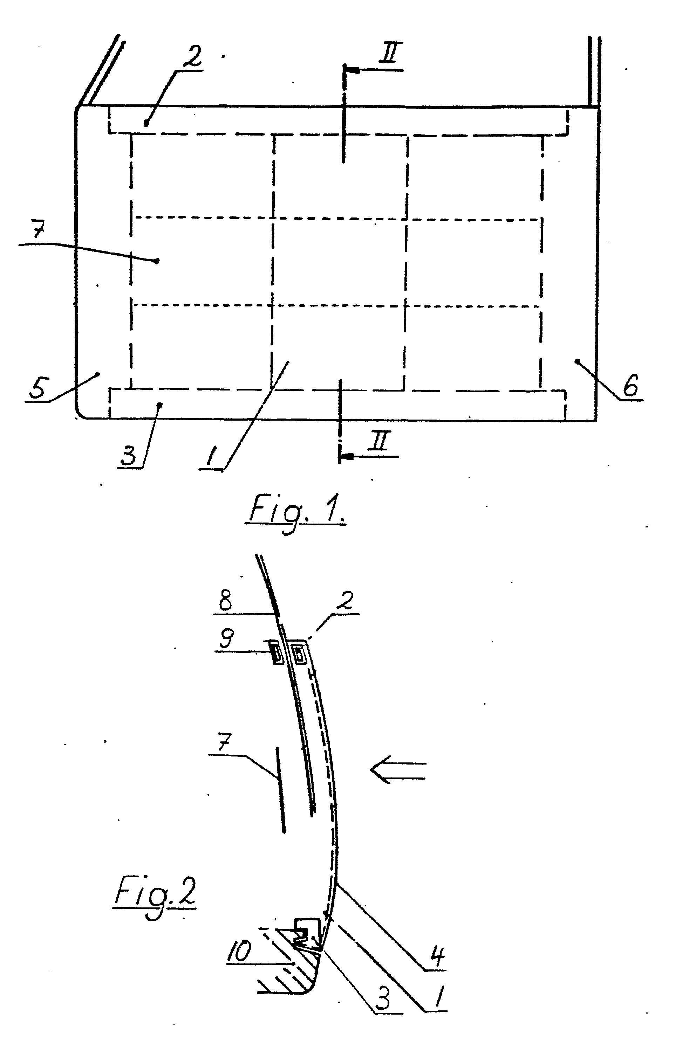

Fig. 1 einen Aufriß der Tür.

Fig. 2 einen Schnitt nach der Linie II–II durch diese Tür.

Fig. 3 ein Detailschnitt durch die Trägerkonstruktion an der Unterkante der Türscheibe,

Fig. 4 eine Variante zur Fig. 3.

Fig. 5 eine weitere Variante hierzu.

Fig. 6 ein Detailschnitt durch einen unteren Türträgers und eine Türschweller.

Fig. 7 eine Variante zu Fig. 6.

Fig. 8 eine andere Variante hierzu.

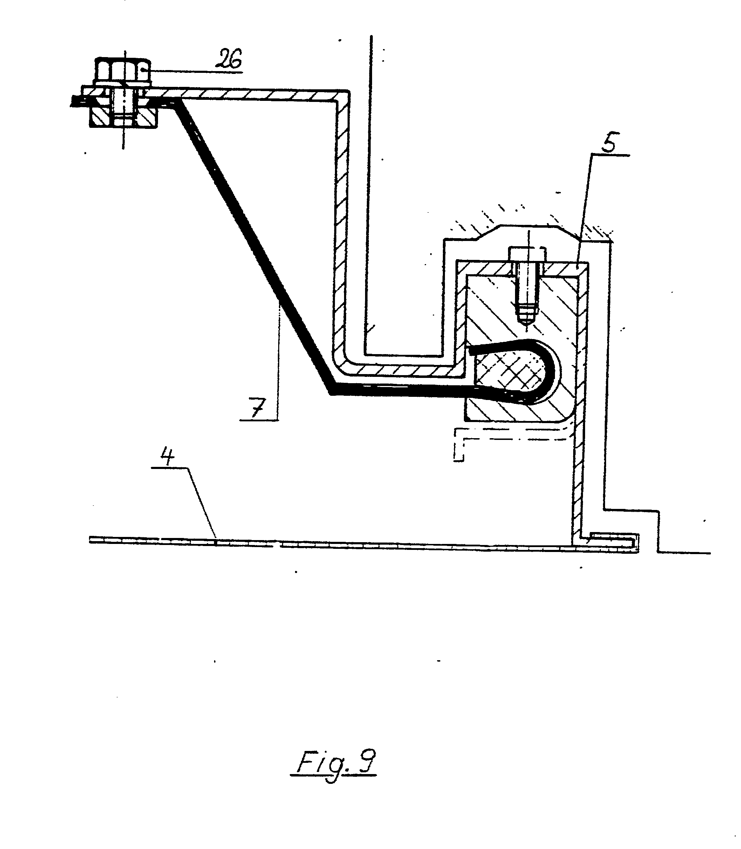

Fig. 9 einen Schnitt durch einen vertikalen Türholm und horizontalen Zugverband und

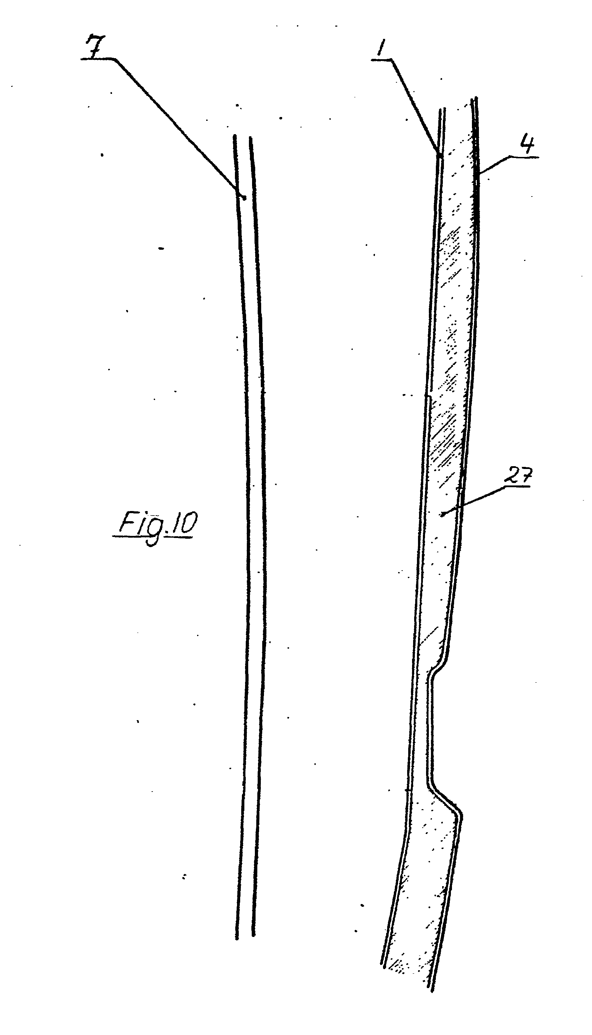

Fig.10 einen Detailschnitt durch eine Tür mit dem Zugverband.

Der Zugverband 1 ist zwischen den horizontalen Trägern 2, 3 eingebaut und befindet sich nahe hinter der Türaußenhaut 4. Die Träger 2, 3 sind mit den vertikalen Trägern 5, 6 fest verbunden. Der von der Türaußenhaut 4 weiter entfernte zweite Zugverband 7 ist direkt an den vertikalen Trägern 5, 6 angebracht. Der Träger 2 bildet die äußere Abschlußkante zum Fenster 8 und ein weiterer Träger 9, der mit den Trägern 5, 6 fest verbunden ist, bildet die innere Abschlußkante zum Fenster. Die angrenzenden Längsseiten der Träger 2, 9 sind so ausgebildet, daß sie bei Deformation von außen ineinander verhaken und ein festes Tragwerk ergeben.

Der Träger 3 ist so geformt, daß er der Länge nach vom Türschweller 10 aufgenommen wird und bei einer seitlichen Kollision mit diesem verhakt.

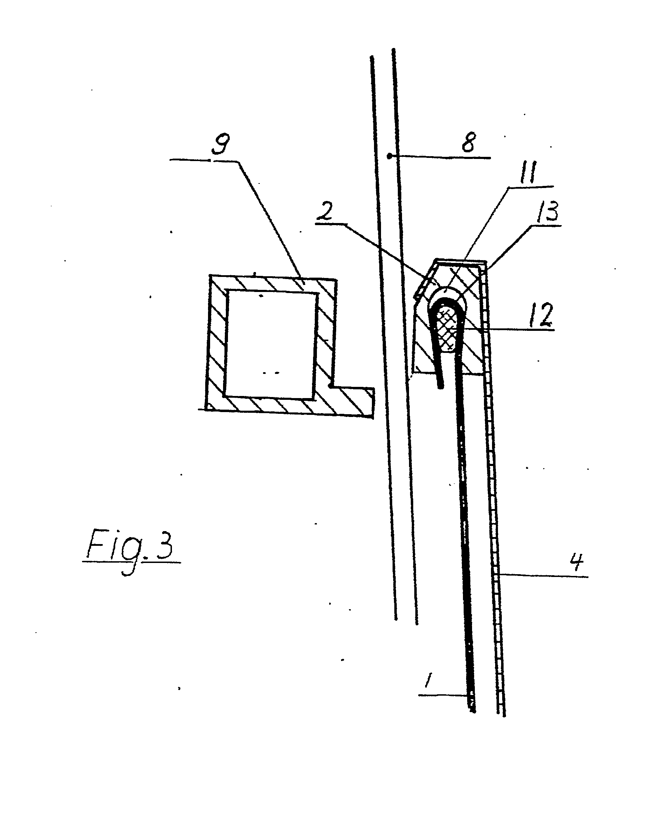

Fig. 3 zeigt eine Befestigung des Zugverbandes 1 am Träger 2 durch eine nach unten offene und sich verengende Längsausnehmung 11, in der Keile 12 eingelegt sind, die in die umgebogenen, in der Längsausnehmung 11 liegenden oberen Enden 13 des Zugverbandes 1 eingeschoben sind und diesen am Träger 2 fixieren.

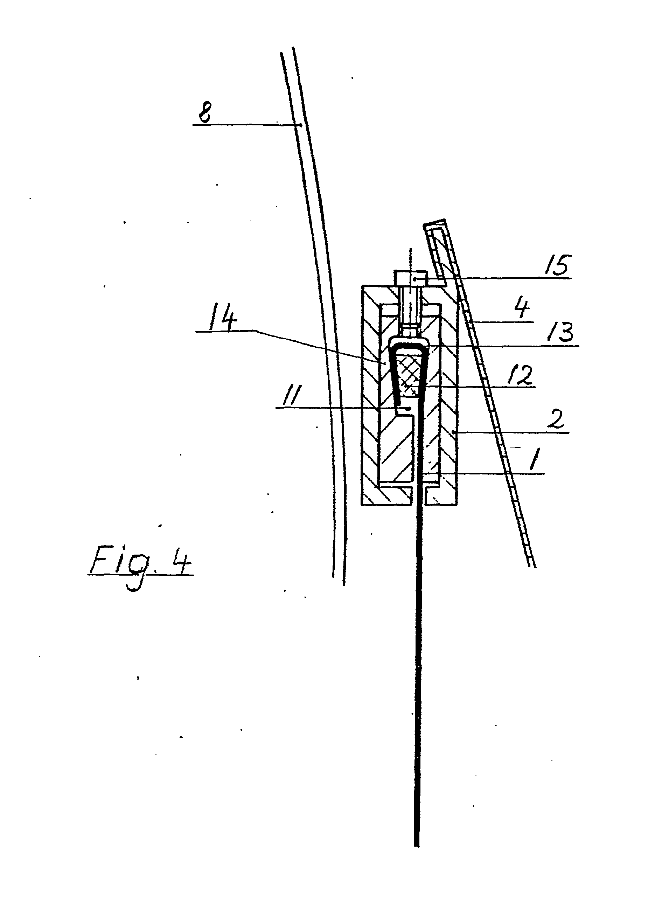

In Fig. 4 ist eine Variante dargestellt, bei der sich im Träger 2 ein Profilstück 14 befindet, in dem die vorher beschriebene Befestigungsart ausgeführt ist. Mittels Schrauben 15, die von der Oberseite des Trägers 2 in das Profilstück 14 geschraubt sind, ist dieses verschiebbar. Auf diese Art wird die Vorspannung des Zugverbandes 1 eingestellt.

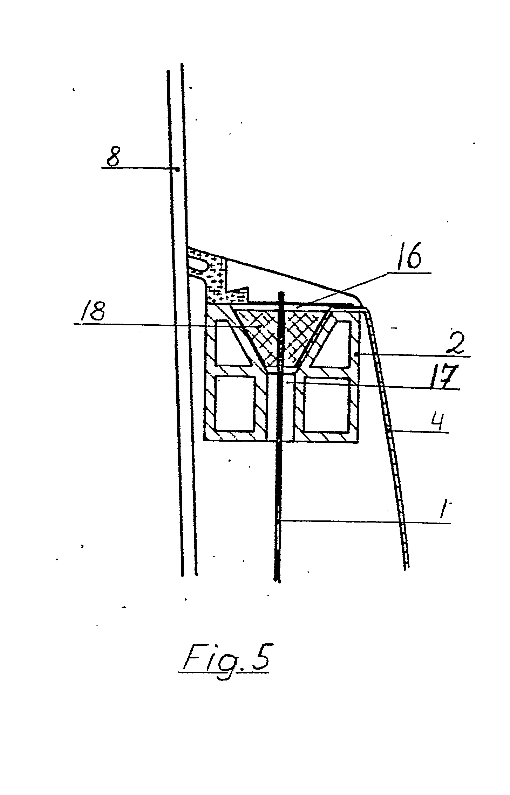

In Fig. 5 ist eine andere Variante der Verbindung des Trägers 2 mit dem Zugverband 1 gezeigt, bei der der Träger 2 an seiner Oberseite eine sich nach oben öffnende Längsnut 16 aufweist und im Bereich der Befestigung des Zugverbandes einen vertikalen Längsschlitz 17 besitzt. Durch diesen Längsschlitz 17 ist der Zugverband 1 gesteckt und durch Klemmteile 18, die in der Längsnut 16 liegen, festgehalten. Zusätzlich halten die Klemmteile 18 die Türaußenhaut 4 fest.

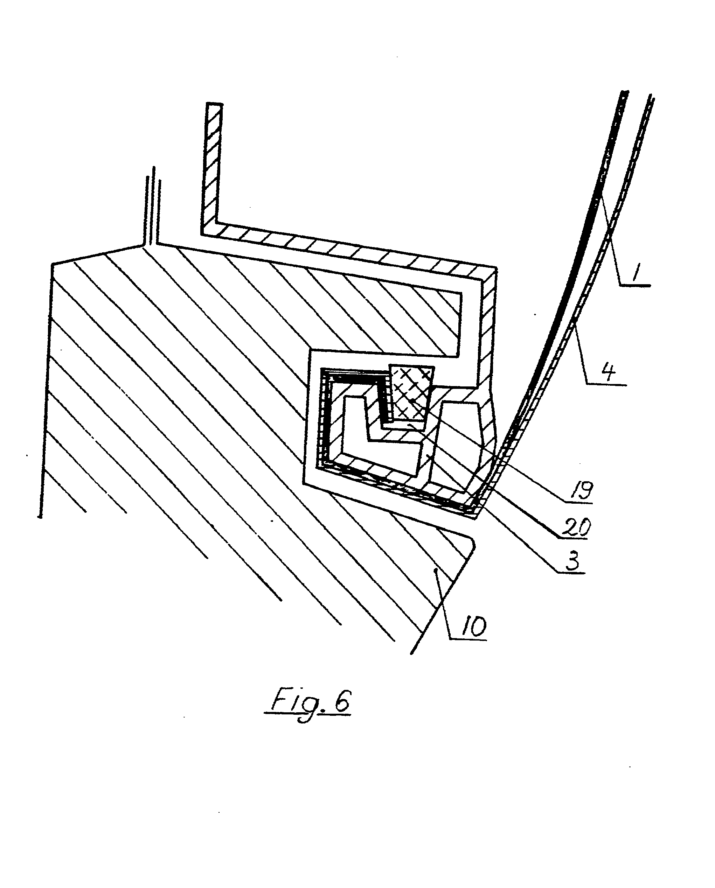

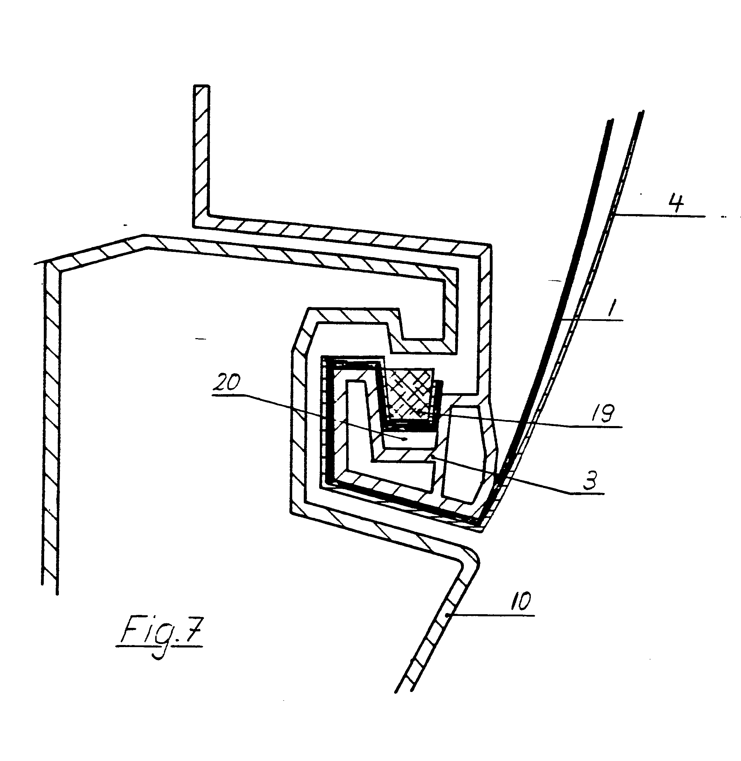

Die Fig. 6 und 7 zeigen Ausbildungsmöglichkeiten einer Keilverbindung des Zugverbandes mit dem Träger 3. Die Türaußenhaut 4 und der Zugverband 1 werden um den unteren horizontalen Träger 3 gebogen und mit einem Keilprofil 19 in eine im Träger 3 befindliche Längsnut 20 geklemmt.

Durch die zweifache Hinterhakung, wie sie in Fig. 7 dargestellt ist, wird die Torsionssteifigkeit im Vergleich zur Variante Fig. 6 noch erhöht.

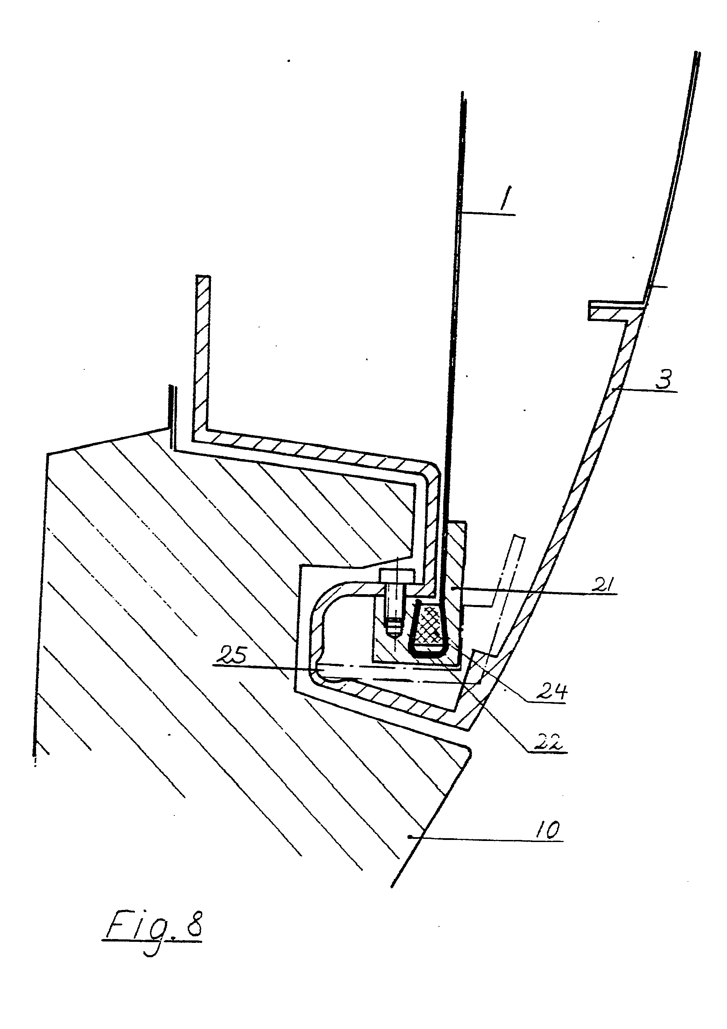

In Fig. 8 ist eine Befestigung des Zugverbandes 1 am Träger 3 gezeigt, bei der die Befestigung des Zugverbandes 1 in einem Profil 21 mit einer Längsausnehmung 22, in die das untere umgebogene Ende des Zugverbandes 1 eingeschoben und durch einen Keil 24 fixiert ist. Dieses Profil 21 ist am Träger 3 verschraubt. Eine Sollbiegestelle 25 ist an der unteren Innenkante zum Türschweller vorgesehen. Die strichpunktierten Linien zeigen den Träger 3, wie er sich bei Deformation um das Profil 21 biegt und dieses zusätzlich festhält. Der zweite Zugverband 7 ist in den vertikalen Trägern 5, 6, die so ausgebildet sind, daß sie in ihrer Längserstrekkung von den vertikalen Trägern des Wagenbaues aufgenommen werden und im Falle einer Kollision mit ihnen verhaken, befestigt. Die Befestigung des zweiten Zugverbandes 7 erfolgt auf die, wie in der Fig. 8 beschriebenen Weise. Durch die Verschraubung 26 ist der Zugverband 7 einstellbar und gleichzeitig als Aggregateträger verwendbar.

Im Raum zwischen Türaußenhaut 4 und dem Zugverband 1 ist Füllmaterial 27 angeordnet.

**Patentansprüche**

1. Türverstärkung an Kraftfahrzeugen zum Schutz bei seitlichen Kollisionen, mit einem auf der Innenseite eines Türaußenbleches (4) vertikal verlaufenden Zugverband (1), dadurch gekennzeichnet, daß dieser Zugverband (1) unmittelbar an der horizontalen Trägern (2,3) der Türrahmenkonstruktion befestigt wird.

2. Türverstärkungen nach Anspruch 1, dadurch gekennzeichnet, daß dem oberen eine äußere Abschlusskante zum Fenster bildenden Träger (2) ein weiterer die innere Abschlußkante zum Fenster bildener horizontaler Träger (9) zugeordnet ist und die einander zugekehrten Längsseiten dieser beiden Träger formschlüssig ineinanderpassen.

3. Türverstärkung nach Anspruch 1 und 2, dadurch gekennzeichnet, daß der untere den Rahmenträger der Türkonstruktion bildende horizontale Träger (3) bei geschlossener Tür in die Türschwelle (10) des Wagenaufbaus der Länge nach formschlüssig eingreift.

4. Türverstärkung nach einem er Ansprüche 1 und 3, dadurch gekennzeichnet, daß der Zugverband (1) an den Trägern (2, 3) mittels bei Belastung sich festziehenden Keilverbindungen (10, 13) befestigt ist.

5. Türverstärkung nach Anspruch 4, dadurch gekennzeichnet, daß die Träger (2, 3) eine Längsausnehmung (11, 22) bzw. Längsnut (16, 29) in der ein in Richtung Ausnehmungs- bzw. Nutöffnung sich verklemmender Keil (12, 18 bzw. 19, 24) gelagert und das zu befestigende Ende des Zugverbandes um diesen Keil gelegt ist.

6. Türverstärkung nach Anspruch 5, dadurch gekennzeichnet, daß die Längsausnehmung (11, 22) in einem im Träger (2, 3) mittels einer Schraubverbindung zum Vorspannen des Zugverbandes verstellbar gelagerten Profilstück (14, 21) ausgebildet ist.

7. Türverstärkung nach einem Ansprüche 1 und 6, dadurch gekennzeichnet, daß ein zweiter Zugverband (7) hinter dem ersten angeordnet ist, der an den vertikalen Türholmen (5, 6) befestigt ist und diese Türholme (5, 6) in die angrenzenden vertikalen Holme des Wagenaufbaues formschlüssig eingreifen.

8. Türverstärkung nach einem der Ansprüche 1 bis 7, dadurch gekennzeichnet, daß zwischen Zugverband (1) und Türaußenblech (4) ein Füllmaterial (27) vorgesehen ist.

Claims

1. Door reinforcing on motor vehicles for the protection by lateral collisions, having a tension brace (1) running vertically on the inside of an outside door panel (4), characterized in that said tension brace (1) is fastened directly to the horizontal girders (2, 3) of the door frame construction.

2. Door reinforcing according to claim 1, characterized in that another horizontal girder (9) forming the inner border towards the window is related to the upper girder (2) forming the outer border towards the window and that the opposite longitudinal sides of said two girders fit into each other positively.

3. Door reinforcing according to claim 1 or 2, characterized in that the lower horizontal girder (3) forming the frame support of the door construction interlocks positively and longitudinally with the sill (10) of the car body when the door is closed.

4. Door reinforcing according to one of the claims 1 to 3, characterized in that the tension brace (1) is fastened to the girders (2, 3) by means of wedgings (10, 13) tightening under load.

5. Door reinforcing according to claim 4, characterized in that the girders (2, 3) have a longitudinal recess (11, 22) or a longitudinal groove (16, 20) where a wedge (12, 18 or 19, 24) getting jammed towards the opening of the recess or of the groove is positioned and the end of the tension brace to be fastened is laid around said wedge.

6. Door reinforcing according to claim 5, characterized in that the longitudinal recess (11, 22) is formed in a profiled piece (14, 21) positioned in the girder (2, 3) and adjustable by means of a bolt connection for pretensioning the tension brace.

7. Door reinforcing according to one of the claims 1 to 6, characterized in that a second tension brace (7) is arranged behind the other which is fastened to the vertical door posts (5, 6) and that said door posts (5, 6) positively interlock with the adjacent vertical posts of the car body.

8. Door reinforcing according to one of the claims 1 to 7, characterized in that between the tension brace (1) and the outside door panel (4) filling material (27) is provided.

**Revendications**

1. Reinforcement de portes de véhicules automobiles, à titre de protection lors de collisions latérales, ce renforcement comportant une entretoise (1) de tension s'étendant verticalement sur la face intérieure d'une tôle extérieure (4) de porte, caractérisé en ce que cette entretoise (1) de tension est fixée directement sur les supports horizontaux (2, 3) de structure de construction du cadre de porte.

2. Renforcement de porte selon la revendication 1, caractérisé en ce qu'il est adjoint au support (2) supérieur, formant une arête d'extrémité vers la fenêtre un autre support (9) horizontal, formant l'arête d'extrémité intérieure vers la fenêtre, et en ce que les côtés longitudinaux en regard de ces deux supports s'emboîtent par encastrement de forme.

3. Renforcement de porte selon la revendication 1 ou 2, caractérisé en ce que le support (3) inférieur horizontal constituant le support-cadre de la construction de porte est, lorsque la porte est fermée, en prise dans sa longueur par encastrement de forme avec le seuil (10) de porte de la carrosserie du véhicule.

4. Renforcement de porte selon l'une des revendications 1 à 3, caractérisé en ce que l'entretoise (1) de tension est fixée sur les supports (2, 3) au moyen d'assemblages par coins (10, 13) qui se bloquent sous l'effet d'une charge.

5. Renforcement de porte selon la revendication 4, caractérisé en ce que les supports (2, 3) présentent un évidement longitudinal (11, 22) ou une rainure longitudinale (16, 20) dans lequel est monté un coin (12, 18 ou 19, 24) en direction de l'ouverture de l'évidement ou de la rainure, et en ce que l'extrémité de l'entretoise à fixer entoure ce coin.

6. Renforcement de porte selon la revendication 5, caractérisé en ce que l'évidement longitudinal (11, 22) est constitué dans une pièce profilée (14, 21) montée dans un support (2, 3) et déplaçable au moyen d'un assemblage par vis pour assurer la précontrainte de l'entretoise de tension.

7. Renforcement de porte selon l'une des revendications 1 à 6, caractérisé en ce qu'il est disposé, derrière la première, une deuxième entretoise (7) de torsion, qui est fixée sur les montants (5, 6) verticaux de porte et en ce que ces montants (5, 6) de porte sont en prise par encastrement de forme avec les montants verticaux limitrophes de la carrosserie du véhicule.

8. Renforcement de porte selon l'une des revendications 1 à 7, caractérisé en ce qu'une matière (27) de remplissage est prévue entre l'entretoise (1) de tension et la tôle extérieure (4) de porte.

EP 0 302 044 B1

_Fig. 1._

_Fig.2_

*Fig.3*

Fig. 4

Fig.5

*Fig. 6*

Fig.7

1

3

21

25

24

22

10

*Fig.8*

*Fig.9*

Fig.10